# EUROPEAN PATENT SPECIFICATION

(11) **EP 4 292 718 B1**
(45) Date of publication and mention of the grant of the patent: **19.11.2025**
(21) Application number: 23740412.4
(22) Date of filing: 09.01.2023
(51) Int. Cl.: B05C 5/02, H01M 4/04, H01M 10/42

(54) **DIE COATER FOR COATING ACTIVE MATERIAL OF SECONDARY BATTERY CURRENT COLLECTOR**
DÜSENBESCHICHTER ZUR BESCHICHTUNG VON AKTIVMATERIAL EINES SEKUNDÄRBATTERIESTROMKOLLEKTORS
DISPOSITIF DE REVÊTEMENT DE MATRICE POUR LE REVÊTEMENT D'UN MATÉRIAU ACTIF D'UN COLLECTEUR DE COURANT DE BATTERIE SECONDAIRE

(30) Priority: 11.01.2022 KR 20220004233
(43) Date of publication of application: 20.12.2023
(73) Proprietor: LG Energy Solution, Ltd., Seoul 07335 (KR)
(72) Inventor: PARK, Joon Sun, Daejeon 34122 (KR); KIM, Guk Tae, Daejeon 34122 (KR)
(74) Representative: Plasseraud IP
(86) International application number: PCT/KR2023/000369
(87) International publication number: WO 2023/136568

(56) References cited:
- CN-A- 108 816 565
- CN-U- 205 253 457
- CN-U- 205 253 457
- CN-U- 209 631 524
- CN-U- 213 133 858
- CN-U- 213 612 390
- KR-B1- 102 316 428

## Description

### [Technical Field]

The present disclosure relates to a die coater capable of effectively simultaneously coating a current collector for a secondary battery with two types of different liquids.

The present application claims the benefit of priority based on Korean Patent Application No. 10-2022-0004233 dated on January 11, 2022.

### [Background Art]

As the technology development and the demand for mobile devices increase, the demand for secondary batteries is also rapidly increasing. Among secondary batteries, lithium secondary batteries are widely used as energy sources for various electronic products as well as various mobile devices in terms of high energy density, a high operating voltage, and excellent storage and lifetime characteristics.

A lithium secondary battery employs an electrode in which an active material layer and an insulating layer are formed on a surface of a current collector. The electrode is manufactured using a coating device such as a die coater such that both of an electrode slurry containing an active material and an insulation coating liquid containing an insulating material are applied onto the surface of the current collector to overlap a portion of a corner of an electrode mixture layer and then dried.

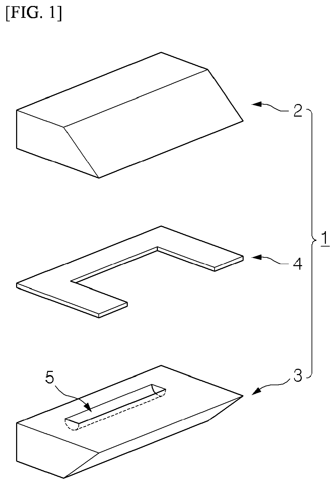

FIG. 1 shows a conventional die coater 1 for applying an electrode slurry. The die coater 1 includes an upper block 2 and a lower block 3, and a shim 4 for a die coater is interposed between the upper block 2 and the lower block 3, and the upper block 2, the lower block 3, and the shim 4 are fastened and coupled to each other using a plurality of bolt members. The lower block 3 is provided with a manifold 5 for accommodating a predetermined volume of an electrode slurry, and the manifold 5 communicates with an external electrode slurry supply part (not shown).

Here, the shim for a die coater serves to form a slit with an appropriate height between the upper block and the lower block and, simultaneously, to limit a flow direction of the electrode slurry to discharge the electrode slurry toward the slit and serves to seal between the upper block and the lower block to prevent the electrode slurry from leaking to other portions, excluding the slit. The shim for a die coater is provided with guides protruding from both ends in a width direction, and a width of the electrode slurry applied to the current collector depends on a distance between the guides.

The insulation coating liquid is applied to both sides of the electrode slurry applied onto the current collector in the width direction. Generally, after the electrode slurry is applied onto the current collector, the insulation coating liquid is applied through an additional process using a separate device. However, it is not desirable in terms of production efficiency to coat the current collector with the electrode slurry and the insulation coating liquid through separate processes.

In order to overcome the above limitation, a technology for forming independent slits for discharging an electrode slurry and an insulation coating liquid in one die coater core has been introduced. However, when either one of the liquids leaks in the die coater, the two types of liquids (e.g., the electrode slurry and the insulation coating liquid) are mixed, or are mixed and discharged from an outlet of a slit, and thus a problem of causing a defect in quality of the current collector occurs. CN 108816565 A and CN 205253457 U both disclose a prior art coating device. [Disclosure]

### [Technical Problem]

An aspect of the present invention is directed to providing a die coater capable of effectively simultaneously coating a current collector for a secondary battery with two types of different liquids.

However, the technical problems to be solved by an aspect of the present invention are not limited to the above-described problem, and other problems not mentioned can be clearly understood by those skilled in the art from the following description of an aspect of the present invention.

The invention is as defined by the appended claims.

### [Technical Solution]

One aspect of the present invention provides a die coater capable of effectively simultaneously coating a current collector for a secondary battery with two types of different liquids, which includes a lower block provided with a manifold configured to accommodate a first liquid, an upper block coupled to the lower block and provided with a second liquid inlet, and a coater shim interposed between the upper block and the lower block to form a first slit and a second slit which open toward a front side and are separated from each other, wherein the coater shim is provided with a second liquid flow path on a center guide extending to protrude to the front side across the manifold, and a manifold insert configured to support a bottom surface of the center guide is provided inside the manifold.

The coater shim may include a base extending in a width direction, a first side guide and a second side guide which extend to protrude from both ends of the base, and the center guide extending to protrude from a central portion of the base.

A space between the first side guide and the center guide and a space between the second side guide and the center guide may form the first slit for discharging the first liquid.

An outlet of the second liquid flow path in the form of a groove formed in the center guide may form the second slit.

The second liquid flow path on the center guide may be formed as a pair of second liquid flow paths, and the second liquid flow path may also be formed on each of the first side guide and the second side guide.

The lower block may be provided with a first liquid inlet which communicates with the manifold, the first liquid inlet may be located below the center guide, and the manifold insert may have a structure in which both side surfaces are open so as not to block the first liquid inlet.

The both side surfaces of the manifold insert may form an arch structure, and a width of the arch structure may be greater than or equal to a diameter of the first liquid inlet.

The manifold insert is provided with a coupling groove which surrounds at least a portion of the bottom surface and at least a portion of each of both side surfaces of the center guide, so as to fit the center guide into the coupling groove of the manifold insert.

The coupling groove of the manifold insert may be provided with a tapered portion in which thicknesses of both sidewalls are gradually decreased toward the front side.

The manifold insert may be made of a polytetrafluoroethylene (PTFE) resin material.

The manifold insert may be provided with a gasket made of an ethylene propylene rubber material on a surface in contact with the bottom surface of the center guide.

The first liquid may be an electrode slurry, and the second liquid may be an insulation coating liquid.

### [Advantageous Effects]

In accordance with a die coater of an aspect of the present invention, which has the above-described configuration, an upper surface of a manifold insert fixed in a manifold firmly supports a lower surface of a center guide so that a center guide of a coater shim cannot be bent toward a manifold and can always maintain a close contact with an upper block. Therefore, two types of different liquids are not mixed inside the die coater.

In addition, the technical effects obtainable through an aspect of the present invention are not limited to the above effects, and other effects not mentioned will be clearly understood by those skilled in the art from the following description of an aspect of the present invention.

### [Description of Drawings]

However, the following drawings attached to the present specification illustrate exemplary embodiments of the present invention and serve to further assist understanding of the technical idea of an aspect of the present invention together with the detailed description of the present disclosure, which will be described below, so that the present disclosure should not be construed as being limited to details shown in the accompanying drawings.
FIG. 1 is a diagram illustrating a configuration of a die coater according to the related art.
FIG. 2 is an exploded perspective view illustrating a die coater according to one embodiment of the present invention.
FIG. 3 is a perspective view illustrating the die coater according to one embodiment of the present invention.
FIG. 4 is a front view illustrating the die coater according to one embodiment of the present invention from the front.
FIG. 5 is a cross-sectional view illustrating the die coater along line "A-A" of FIG. 3.
FIG. 6 is a perspective view illustrating a manifold insert according to one embodiment of the present invention.
FIG. 7 is a perspective view illustrating a manifold insert according to another embodiment of the present invention.
FIG. 8 is a diagram illustrating a configuration of the die coater to which the manifold insert of FIG. 7 is applied.

### [Detailed Description]

Some embodiments of the present invention may be modified into various forms and may have a variety of embodiments, and, therefore, specific embodiments will be described in detail below.

However, the embodiments are not to be taken in a sense which limits the present invention to the specific embodiments and should be construed to include all modifications, equivalents, or substituents falling within the technical scope of the present invention as defined by the appended claims.

In the present invention, the terms "comprising," "having," or the like are used to specify that a feature, a number, a step, an operation, a component, an element, or a combination thereof described herein exists, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in the present application, as being disposed "on" may include the case of being disposed not only on an upper portion but also on a lower portion.

Some embodiments of the present invention relates to a die coater capable of effectively simultaneously coating a current collector for a secondary battery with two types of different liquids.

The die coater of the present invention includes a lower block provided with a manifold configured to accommodate a first liquid, an upper block coupled to the lower block and provided with a second liquid inlet, and coater shims interposed between the upper block and the lower block to form a first slit and a second slit which open toward a front side and are separated from each other.

Here, the coater shim is provided with a second liquid flow path on a center guide extending to protrude to the front side across the manifold, and corresponds to the second liquid flow path, a manifold insert supporting a lower surface of the center guide is provided in the manifold.

According to the die coater of some embodiments of the present invention, two different types of liquid are simultaneously discharged, for example, the electrode slurry and the insulation coating liquid. In particular, an internal mixing of the first liquid and the second liquid due to a gap caused by the center guide being bent towards the manifold due to a pressure of the second liquid flowing through the second liquid flow path is effectively prevented by the support of the manifold insert. Therefore, according to the die coater of some embodiments of the present invention, the current collector for the secondary battery can be effectively and simultaneously coated with two types of different liquids.

### [Modes of the Invention]

Hereinafter, some embodiments of a die coater according to some embodiments of the present invention will be described in detail with reference to the accompanying drawings.

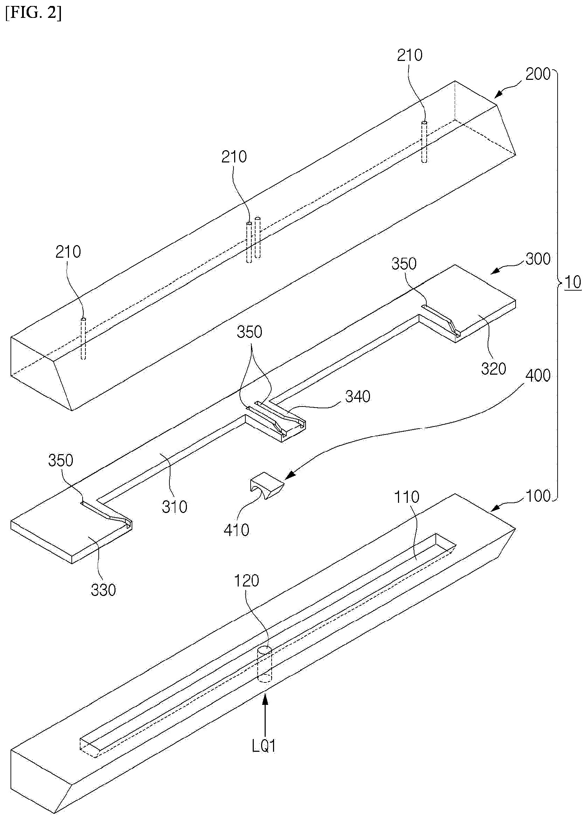

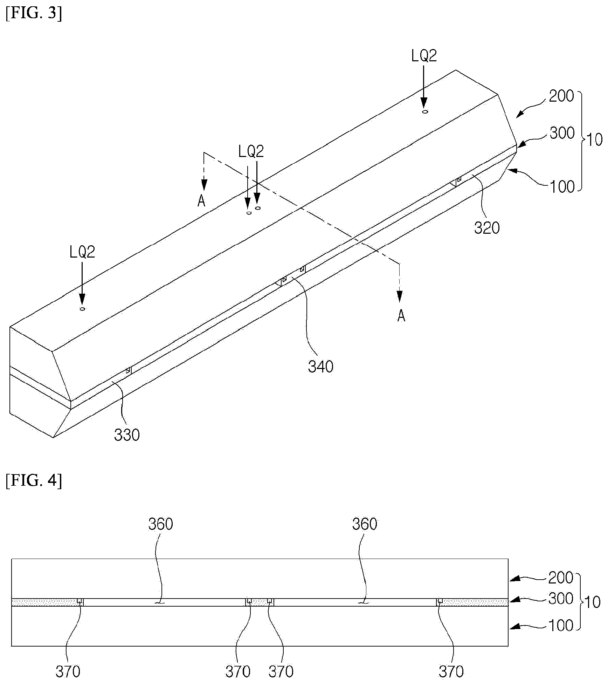

FIG. 2 is an exploded perspective view illustrating a die coater 10 according to one embodiment of the present invention, and FIG. 3 is a perspective view illustrating the die coater 10 according to one embodiment of the present invention.

As described above, embodiments of the present invention relate to a die coater 10 capable of effectively simultaneously coating a current collector for a secondary battery with two types of different liquids. The two types of different liquids may be, for example, an electrode slurry and an insulation coating liquid. The following description can be understood as an embodiment in which a first liquid LQ1 is an electrode slurry and a second liquid LQ2 is an insulation coating liquid.

The die coater 10 of the present invention includes a lower block 100, an upper block 200, and a coater shim 300 interposed therebetween and also includes a manifold insert 400 for supporting a portion of the coater shim 300.

The lower block 100 is a portion occupying approximately half of a body of the die coater 10 and is provided with a manifold which accommodates a predetermined amount of the first liquid LQ1. The upper block 200 is a portion occupying the remaining half coupled to the lower block 100 and is provided with a second liquid inlet 210. Here, upper and lower portions are discussed on the basis of the drawings but do not limit an actual installation direction of the die coater 10.

For reference, FIG. 2 shows a first liquid inlet 120 communicating with the manifold of the lower block 100 that is formed in the lower block 100, but the first liquid inlet 120 may be formed in the upper block 200. On the other hand, the second liquid inlet 210 should be formed in the upper block 200. This is because a communication direction with a second liquid flow path 350 formed in the form of a groove on the coater shim 300, which will be described below, is limited to the upper block 200.

The coater shim 300 is interposed between the upper block 200 and the lower block 100 to form first slits 360 and second slits 370 which open toward the front side. The first slits 360 for discharging the first liquid LQ1 and the second slits 370 for discharging the second liquid LQ2 are spatially separated from each other. A detailed structure of the coater shim 300 will be described in detail below. The coater shim 300 is basically interposed between the upper block 200 and the lower block 100 and serves to form slits each having a height suitable for discharging a liquid. In addition to the above description, the coater shim 300 limits a flow direction of a liquid, which flows into the die coater 10 or is accommodated in the die coater 10, to be discharged toward the slit without a backflow and also serves to seal the liquid so as not to leak to other parts excluding the slit.

Referring to FIG. 2, the coater shim 300 is provided with the second liquid flow path 350 on a center guide 340 extending to protrude across a concave manifold to the front side of the die coater. In addition, in order to correspond to the second liquid flow path 350, the manifold insert 400 for supporting a bottom surface of the center guide 340 is provided inside the manifold.

First, to describe a detailed configuration of the coater shim 300, the coater shim 300 includes a base 310 extending in the width direction, a first side guide 320 and a second side guide 330 extending to protrude from both ends of the base 310, and the center guide 340 protruding from a central portion of the base 310. An overall outer size of the coater shim 300 corresponds to a size of a coupling surface between the upper block 200 and the lower block 100.

Here, the coater shim 300 provided in some embodiments of the present invention includes the center guide 340. This is because the die coater 10 of some embodiments of the present invention is provided for stripe coating by which the electrode slurry is applied onto the current collector in a plurality of rows by dividing a region of the current collector into two or more regions.

FIG. 4 is a front view illustrating the die coater 10 according to one embodiment of the present invention from the front. Due to the coater shim 300 interposed between the upper block 200 and the lower block 100, the die coater 10 is divided into two regions including a region between the first side guide 320 and the center guide 340 and a region between the second side guide 330 and the center guide 340. The two regions form the first slits 360 which discharge the first liquid LQ1 accommodated in the manifold. Since the first slits 360 are separated by the center guide 340 in the center, the die coater 10 of the illustrated embodiment forms a layer of an electrode slurry divided into two rows.

In addition, outlets of the second liquid flow paths 350 in the form of a groove formed in the center guide 340 forms the second slits 370. The second liquid flow path 350 is formed in a shallow groove shape which does not pass through the center guide 340. Therefore, the second liquid flow paths 350 are spatially separated from the first slits 360 adjacent thereto by both sidewalls of the center guide 340. In addition, a closed end portion of the second liquid flow path 350 communicates with the second liquid inlet 210 formed in the upper block 200. Thus, the second liquid LQ2 supplied through the second liquid inlet 210 flows in the second liquid flow path 350 and is discharged through the second slit 370.

In the embodiment of the coater shim 300 shown in FIG. 2, in particular, the second liquid flow path 350 on the center guide 340 is formed as a pair of the second liquid flow paths 350, and one second liquid flow path 350 is also formed on each of the first side guide 320 and the second side guide 330. That is, the second slits 370 are disposed on both sides of each of the pair of the separated first slits 360. Due to the structure between the first slit 360 and the second slit 370, an insulating layer coated with the insulation coating liquid of the second liquid LQ2 is formed at both sides of the two-row mixture layer formed of the electrode slurry which is the first liquid LQ1.

According to the above embodiment, it is possible to apply the electrode slurry in two rows and, simultaneously, to apply the insulation coating liquid to the corner of the electrode slurry in each row. However, due to a structural limitation of the center guide 340 crossing the manifold, there is a problem that the first liquid LQ1 and the second liquid LQ2 can be mixed inside the die coater 10.

That is, the second liquid LQ2 is pressurized through the second liquid inlet 210 and flows through the second liquid flow path 350, and the center guide 340 is bent toward the manifold 110 due to a pressure of the second liquid LQ2 applied to the second liquid flow path 350. In other words, since the thin center guide 340 crossing the concave manifold receives no additional lower supporting force, the thin center guide 340 is easily bent toward the manifold.

Therefore, the center guide 340 bent toward the manifold is not in close contact with the upper block 200, and thus a gap is formed between the center guide 340 and the upper block 200. The gap formed in this way serves as a gap through which the second liquid LQ2 flowing in the second liquid flow path 350 flows into the manifold and first slit 360, which causes a problem that the first liquid LQ1 and the second liquid LQ2 are mixed inside the die coater 10.

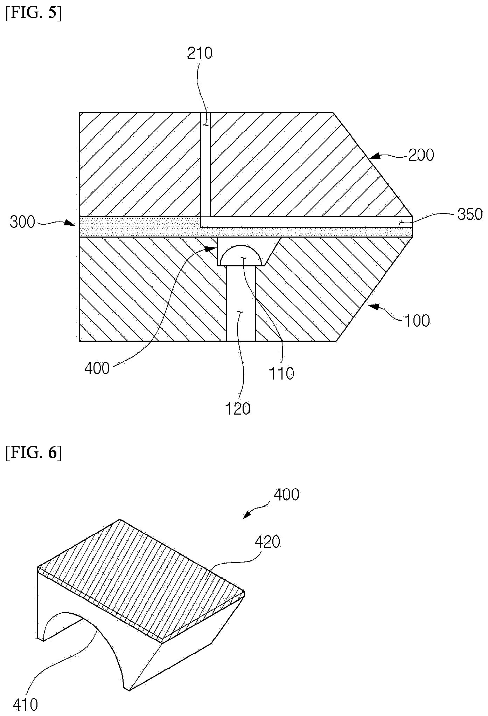

According to the present invention, in order to solve the structural vulnerability of the center guide 340, the manifold insert 400 for supporting the bottom surface of the center guide 340 is provided and shown in a cross-sectional view of FIG. 5.

FIG. 5 is the cross-sectional view illustrating the die coater along line "A-A" of FIG. 3. Referring to FIG. 5, the manifold insert 400 having a shape corresponding to a cross section of the manifold (a cross section in a discharge direction) is fixedly inserted into the manifold. A height of the manifold insert 400 corresponds to a depth of the manifold, and an upper surface of the manifold insert 400 fixed in the manifold supports the bottom surface of the center guide 340. Thus, the center guide 340 is not bent toward the manifold and maintains a close contact with the upper block 200, thereby preventing the second liquid from leaking.

In the illustrated embodiment, the lower block 100 is provided with the first liquid inlet 120 communicating with the manifold, and the first liquid inlet 120 is also located below the center guide 340. In this case, the manifold insert 400 has a structure in which both side surfaces of the manifold insert 400 are open so as not to block the first liquid inlet 120. That is, the manifold insert 400 has a shape as a bridge supporting the center guide 340.

In addition, the both side surfaces of the manifold insert 400 may form a structure of an arch 410, and a width of the structure of the arch 410 may be formed to be greater than or equal to a diameter of the first liquid inlet 120. A curved surface of the arch 410, which is similar to an arc, an ellipse, or parabola, does not hinder the flow of first liquid LQ1 introduced through the first liquid inlet 120. In addition, the width of the arch 410 formed to be greater than or equal to the diameter of the first liquid inlet 120 does not reduce an inflow area of the first liquid LQ1.

In the die coater 10 of the embodiment, a phenomenon in which the center guide 340 is bent toward the manifold due to the pressure applied to the second liquid flow path 350 is effectively suppressed through the support of the manifold insert 400. Thus, the first liquid LQ1 and the second liquid LQ2 are not mixed inside the die coater 10. Therefore, according to the die coater 10 of the present invention, the current collector for the secondary battery can be effectively and simultaneously coated with two types of different liquids.

The present invention relates further improving a close contact or coupling between the center guide 340 and the manifold insert 400. The coupling of the center guide 340 to the manifold insert 400 is improved so that the mixing problem of the first liquid LQ1 and the second liquid LQ2 inside the die coater 10 is more definitely prevented.

FIG. 6 is a perspective view illustrating a manifold insert 400 according to the present invention. In FIG. 6, the manifold insert 400 is made of a polytetrafluoroethylene (PTFE) resin material, for example, the trade name of Teflon resin. The PTFE resin is a material with excellent chemical resistance and excellent durability even when in contact with the electrode slurry and the insulation coating liquid for a long time, and therefore, the lower supporting force of the manifold insert 400 is maintained for a long time.

In addition, the manifold insert 400 may further include a gasket 420 made of an ethylene propylene rubber material on a surface in contact with the bottom surface of the center guide 340. The gasket 420 made of the ethylene propylene rubber material allows the entire bottom surface of the center guide 340 to be uniformly in close contact with the manifold insert 400, and thus the lower support force of the manifold insert 400 is uniformly applied to the entire center guide 340.

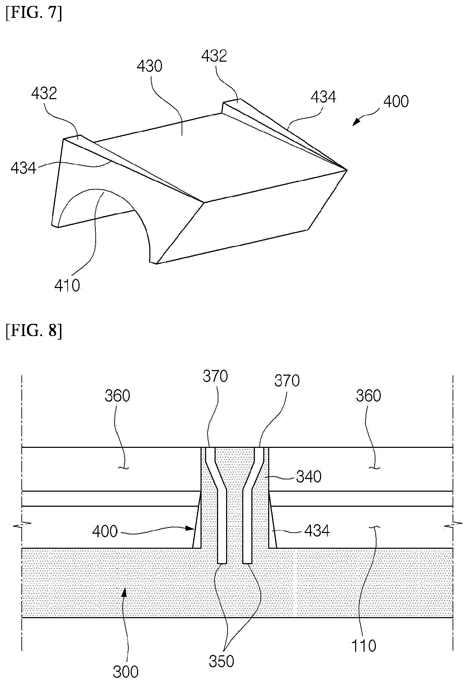

FIG. 7 is a perspective view illustrating the manifold insert 400 according to the invention, which improves coupling of the center guide 340 in terms of a shape. Here, although the examples of FIGS. 6 and 7 are separately described, the examples may be combined and implemented in one manifold insert 400.

The manifold insert 400 of FIG. 7 includes a coupling groove 430 which surrounds the bottom surface and both side surfaces of the center guide 340. The coupling groove 430 of the manifold insert 400 improves engagement with the center guide 340 and also improves alignment of the manifold insert 400 with the center guide 340. In other words, the center guide 340 has a structure of being fitted into the coupling groove 430 of the manifold insert 400. This groove structure allows the center guide 340 and the manifold insert 400 to be aligned in a row and also increases a contact area, thereby implementing a better support structure.

However, the coupling groove 430 of the manifold insert 400 has sidewalls 432 surrounding the both side surfaces of the center guide 340, thereby partially occupying a region of the first slit 360. There is a concern that the two sidewalls 432 of the coupling groove 430 may hinder a flow of the first liquid LQ1 flowing to the first slit 360. Thus, as well shown in FIG. 8, the coupling groove 430 of the manifold insert 400 may have a tapered portion 434 in which a thickness of the sidewall 432 is gradually decreased toward the front side. A width of the manifold insert 400 at a front end of the tapered portion 434 is the same as a width of the center guide 340. Thus, the first liquid LQ1 flowing from the manifold to the first slit 360 smoothly flows along an outer edge of the tapered portion 434. Consequently, the manifold insert 400 does not occupy the regions of the first slit 360. Of course, the contour of the tapered portion 434 may be formed in various curved shapes other than the illustrated straight line shape.

As described above, the present invention has been described in more detail with reference to the accompanying drawings. Therefore, the configurations described herein or shown in the drawings are merely one embodiment of the present invention and do not represent all of the present invention such that it should be understood that there may be various equivalents and modifications falling within the scope of the appended claims, capable of substituting the embodiments and the configurations at the time of filing the present application.

**[Description of Reference Numerals]**

| | | | |
|---|---|---|---|
| 10: | die coater | 100: | lower block |
| 110: | manifold | 120: | first liquid inlet |
| 200: | upper block | 210: | second liquid inlet |
| 300: | coater shim | 310: | base |
| 320: | first side guide | 330: | second side guide |
| 340: | center guide | 350: | second liquid flow path |
| 360: | first slit | 370: | second slit |
| 400: | manifold insert | 410: | arch |
| 420: | gasket | 430: | coupling groove |
| 432: | sidewall | 434: | tapered portion |
| LQ1: | first liquid | LQ2: | second liquid |

### [Industrial Applicability]

The die coater of some embodiments of the present invention is useful for effectively and simultaneously coating the current collector for the secondary battery with two types of different liquids.

## Claims

1. A die coater (10) comprising:
a lower block (100) including a manifold (110) configured to accommodate a first liquid (LQ1);
an upper block (200) coupled to the lower block (100) and including a second liquid inlet (210); and
a coater shim (300) interposed between the upper block (200) and the lower block (100), so as to form a first slit (360) and a second slit (370), wherein the first slit (360) and the second slit (370) open toward a front side of the die coater (10) and are separated from each other,
wherein the coater shim (300) includes a second liquid flow path (350) disposed on a center guide (340), wherein the center guide (340) protrudes and extends across the manifold (110) to the front side of the die coater (10), and
a manifold insert (400) configured to support a bottom surface of the center guide (340) is recessed in a surface of the manifold (110), **characterised in that**
the manifold insert (400) is provided with a coupling groove (430) which surrounds at least a portion of the bottom surface of the center guide (340) and at least a portion of each of the both side surfaces of the center guide (340) so as to fit the center guide (340) into the coupling groove (430) of the manifold insert (400).

2. The die coater (10) of claim 1, wherein the coater shim (300) includes:
a base (310) extending in a width direction,
a first side guide (320) and a second side guide (330) disposed on each end of the base (310) in the width direction, wherein the first and second guides protrude and extend from both ends of the base (310), and
the center guide (340) protrudes and extends from a central portion of the base (310).

3. The die coater (10) of claim 2, wherein the coater shim (300) defines:
a space between the first side guide (320) and the center guide (340); and
a space between the second side guide (330) and the center guide (340),
wherein the space between the first guide and the center guide (340), and the space between the second guide and the center guide (340) form the first slit (360) being configured to discharge the first liquid (LQ1).

4. The die coater (10) of claim 3, wherein the second liquid flow path (350), includes a groove (430) formed in the center guide (340) which defines the second slit (370), so as to form an outlet.

5. The die coater (10) of claim 4, wherein:
the second liquid flow path (350) on the center guide (340) is formed as a pair of second liquid flow paths (350); and
the second liquid flow path (350) is also formed on each of the first side guide (320) and the second side guide (330).

6. The die coater (10) of claim 1, wherein:
the lower block (100) includes a first liquid inlet (120) which communicates with the manifold (110),
wherein the first liquid inlet (120) is located below the center guide (340), and
wherein the manifold insert (400) defines a through hole in both side surfaces of the manifold insert (400) so as not to block the first liquid inlet (120).

7. The die coater (10) of claim 6, wherein the through hole forms an arch structure (410) at both side surfaces of the manifold insert (400), and wherein a width of the arch structure (410) is greater than or equal to a diameter of the first liquid inlet (120).

8. The die coater (10) of claim 1, wherein the coupling groove (430) of the manifold insert (400) includes a tapered portion (434) in a thickness direction of each of both sidewalls (432) of the manifold insert (400), wherein the tapered portion (434) is gradually decreased toward the front side.

9. The die coater (10) of claim 1, wherein the manifold insert (400) is made of a polytetrafluoroethylene resin material.

10. The die coater (10) of claim 9, wherein the manifold insert (400) includes a gasket (420) made of an ethylene propylene rubber material on a surface, wherein a surface of the gasket (420) is configured to contact the bottom surface of the center guide (340).

11. The die coater (10) of claim 1, wherein:
the first liquid (LQ1) includes an electrode slurry; and
a second liquid (LQ2) includes an insulation coating liquid.

## Patentansprüche

1. Düsenbeschichter (10), umfassend:
einen unteren Block (100), welcher eine Sammelleitung (110) umfasst, welche dazu eingerichtet ist, eine erste Flüssigkeit (LQ1) aufzunehmen;
einen oberen Block (200), welcher mit dem unteren Block (100) gekoppelt ist und einen zweite Flüssigkeit-Einlass (210) umfasst; und
ein Beschichter-Plättchen (300), welches zwischen den oberen Block (200) und den unteren Block (100) eingefügt ist, um einen ersten Schlitz (360) und einen zweiten Schlitz (370) zu bilden, wobei sich der erste Schlitz (360) und der zweite Schlitz (370) in Richtung einer Vorderseite des Düsenbeschichters (10) öffnen und voneinander getrennt sind,
wobei das Beschichter-Plättchen (300) einen zweite Flüssigkeit-Strömungspfad (350) umfasst, welcher an einer zentralen Führung (340) angeordnet ist, wobei die zentrale Führung (340) über die Sammelleitung (110) zu der Vorderseite des Düsenbeschichters (10) hervorsteht und sich über diese erstreckt, und
wobei ein Sammelleitung-Einsatz (400), welcher dazu eingerichtet ist, eine Bodenfläche der zentralen Führung (340) zu haltern, in eine Fläche der Sammelleitung (110) vertieft ist, **dadurch gekennzeichnet, dass** der Sammelleitung-Einsatz (400) mit einer Kopplungsnut (430) bereitgestellt ist, welche wenigstens einen Abschnitt der Bodenfläche der zentralen Führung (340) und wenigstens einen Abschnitt von jeder der beiden Seitenflächen der zentralen Führung (340) umgibt, um die zentrale Führung (340) in die Kopplungsnut (430) des Sammelleitung-Einsatzes (400) zu passen.

2. Düsenbeschichter (10) nach Anspruch 1, wobei das Beschichter-Plättchen (300) umfasst:
eine Basis (310), welche sich in einer Breitenrichtung erstreckt,
eine erste seitliche Führung (320) und eine zweite seitliche Führung (330), welche in der Breitenrichtung an jedem Ende der Basis (310) bereitgestellt sind, wobei die erste und die zweite Führung von beiden Enden der Basis (310) hervorstehen und sich von diesen erstrecken, und
die zentrale Führung (340) von einem zentralen Abschnitt der Basis (310) hervorsteht und sich von diesem erstreckt.

3. Düsenbeschichter (10) nach Anspruch 2, wobei das Beschichter-Plättchen (300) definiert:
einen Raum zwischen der ersten seitlichen Führung (320) und der zentralen Führung (340); und
einen Raum zwischen der zweiten seitlichen Führung (330) und der zentralen Führung (340),
wobei der Raum zwischen der ersten Führung und der zentralen Führung (340) und der Raum zwischen der zweiten Führung und der zentralen Führung (340) den ersten Schlitz (360) bilden, welcher dazu eingerichtet ist, die erste Flüssigkeit (LQ1) auszugeben.

4. Düsenbeschichter (10) nach Anspruch 3, wobei der zweite Flüssigkeit-Strömungspfad (350) eine Nut (430) umfasst, welche in der zentralen Führung (340) gebildet ist und welche den zweiten Schlitz (370) definiert, um einen Auslass zu bilden.

5. Düsenbeschichter (10) nach Anspruch 4, wobei:
der zweite Flüssigkeit-Strömungspfad (350) an der zentralen Führung (340) als ein Paar zweiter Flüssigkeit-Strömungspfade (350) gebildet ist; und
der zweite Flüssigkeit-Strömungspfad (350) ferner an jeder aus der ersten seitlichen Führung (320) und der zweiten seitlichen Führung (330) gebildet ist.

6. Düsenbeschichter (10) nach Anspruch 1, wobei:
der untere Block (100) einen erste Flüssigkeit-Einlass (120) umfasst, welcher mit der Sammelleitung (110) in Verbindung steht,
wobei der erste Flüssigkeit-Einlass (120) unter der zentralen Führung (340) angeordnet ist, und
wobei der Sammelleitung-Einsatz (400) in beiden Seitenflächen des Sammelleitung-Einsatzes (400) ein Durchgangsloch definiert, um den ersten Flüssigkeit-Einlass (120) nicht zu blockieren.

7. Düsenbeschichter (10) nach Anspruch 6, wobei das Durchgangsloch an beiden Seitenflächen des Sammelleitung-Einsatzes (400) eine Bogenstruktur (410) bildet, und wobei eine Breite der Bogenstruktur (410) größer als oder gleich wie ein Durchmesser des erste Flüssigkeit-Einlasses (120) ist.

8. Düsenbeschichter (10) nach Anspruch 1, wobei die Kopplungsnut (430) des Sammelleitung-Einsatzes (400) in einer Dickenrichtung jeder der beiden Seitenwände (432) des Sammelleitung-Einsatzes (400) einen sich verjüngenden Abschnitt (434) umfasst, wobei der sich verjüngende Abschnitt (434) in Richtung der Vorderseite graduell abnimmt.

9. Düsenbeschichter (10) nach Anspruch 1, wobei der Sammelleitung-Einsatz (400) aus einem Polytetrafluorethylen-Harzmaterial erzeugt ist.

10. Düsenbeschichter (10) nach Anspruch 9, wobei der Sammelleitung-Einsatz (400) eine Dichtung (420) umfasst, welche an einer Fläche aus einem Ethylen-Propylen-Gummimaterial erzeugt ist, wobei eine Fläche der Dichtung (420) dazu eingerichtet ist, die Bodenfläche der zentralen Führung (340) zu kontaktieren.

11. Düsenbeschichter (10) nach Anspruch 1, wobei:
die erste Flüssigkeit (LQ1) eine Elektrodenaufschlämmung umfasst;
und
die zweite Flüssigkeit (LQ2) eine Flüssigkeit einer Isolierungsbeschichtung umfasst.

## Revendications

1. Métier à filière pour l'enduction par fusion (10) comprenant :
un bloc inférieur (100) comportant un collecteur (110) configuré pour loger un premier liquide (LQ1) ;
un bloc supérieur (200) couplé au bloc inférieur (100) et comportant une seconde entrée de liquide (210) ; et
une cale pour métier pour l'enduction (300) interposée entre le bloc supérieur (200) et le bloc inférieur (100), de manière à former une première fente (360) et une seconde fente (370), dans lequel la première fente (360) et la seconde fente (370) s'ouvrent vers un côté avant du métier à filière pour l'enduction par fusion (10) et sont séparées l'une de l'autre,
dans lequel la cale pour métier pour l'enduction (300) comporte un second trajet d'écoulement de liquide (350) disposé sur un guide central (340), dans lequel le guide central (340) fait saillie et s'étend à travers le collecteur (110) jusqu'au côté avant du métier à filière pour l'enduction par fusion (10), et
un insert de collecteur (400) configuré pour supporter une surface inférieure du guide central (340) est encastré dans une surface du collecteur (110), **caractérisé en ce que** l'insert de collecteur (400) est pourvu d'une rainure de couplage (430) qui entoure au moins une partie de la surface inférieure du guide central (340) et au moins une partie de chacune des deux surfaces latérales du guide central (340) de manière à positionner le guide central (340) dans la rainure de couplage (430) de l'insert de collecteur (400).

2. Métier à filière pour l'enduction par fusion (10) selon la revendication 1, dans lequel la cale pour métier pour l'enduction (300) comporte :
une base (310) s'étendant dans une direction de largeur,
un premier guide latéral (320) et un second guide latéral (330) disposés sur chaque extrémité de la base (310) dans la direction de largeur, dans lequel les premier et second guides font saillie et s'étendent à partir des deux extrémités de la base (310), et
le guide central (340) fait saillie et s'étend à partir d'une partie centrale de la base (310).

3. Métier à filière pour l'enduction par fusion (10) selon la revendication 2, dans lequel la cale pour métier pour l'enduction (300) définit :
un espace entre le premier guide latéral (320) et le guide central (340) ; et
un espace entre le second guide latéral (330) et le guide central (340),
dans lequel l'espace entre le premier guide et le guide central (340) et l'espace entre le second guide et le guide central (340) forment la première fente (360) qui est configurée pour décharger le premier liquide (LQ1).

4. Métier à filière pour l'enduction par fusion (10) selon la revendication 3, dans lequel le second trajet d'écoulement de liquide (350) comporte une rainure (430) formée dans le guide central (340) qui définit la seconde fente (370), de manière à former une sortie.

5. Métier à filière pour l'enduction par fusion (10) selon la revendication 4, dans lequel :
le second trajet d'écoulement de liquide (350) sur le guide central (340) se présente sous la forme d'une paire de seconds trajets d'écoulement de liquide (350) ; et
le second trajet d'écoulement de liquide (350) est également formé sur chacun du premier guide latéral (320) et du second guide latéral (330).

6. Métier à filière pour l'enduction par fusion (10) selon la revendication 1, dans lequel :
le bloc inférieur (100) comporte une première entrée de liquide (120) qui communique avec le collecteur (110),
dans lequel la première entrée de liquide (120) est située sous le guide central (340), et
dans lequel l'insert de collecteur (400) définit un trou traversant dans les deux surfaces latérales de l'insert de collecteur (400) de manière à ne pas bloquer la première entrée de liquide (120).

7. Métier à filière pour l'enduction par fusion (10) selon la revendication 6, dans lequel le trou traversant forme une structure de voûte (410) sur les deux surfaces latérales de l'insert de collecteur (400), et dans lequel une largeur de la structure de voûte (410) est supérieure ou égale à un diamètre de la première entrée de liquide (120).

8. Métier à filière pour l'enduction par fusion (10) selon la revendication 1, dans lequel la rainure de couplage (430) de l'insert de collecteur (400) comporte une partie conique (434) dans une direction d'épaisseur de chacune de deux parois latérales (432) de l'insert de collecteur (400), dans lequel la partie conique (434) est progressivement amincie vers le côté avant.

9. Métier à filière pour l'enduction par fusion (10) selon la revendication 1, dans lequel l'insert de collecteur (400) est constitué d'un matériau en résine de polytétrafluoroéthylène.

10. Métier à filière pour l'enduction par fusion (10) selon la revendication 9, dans lequel l'insert de collecteur (400) comporte un joint (420) constitué d'un matériau de caoutchouc éthylène-propylène sur une surface, dans lequel une surface du joint (420) est configurée pour entrer en contact avec la surface inférieure du guide central (340).

11. Métier à filière pour l'enduction par fusion (10) selon la revendication 1, dans lequel :
le premier liquide (LQ1) comporte une suspension d'électrode ; et
un second liquide (LQ2) comporte un liquide de revêtement isolant.
